# EUROPEAN PATENT APPLICATION

(11) **EP 2 631 742 A2**
(43) Date of publication of application: **28.08.2013**
(21) Application number: 13156265.4
(22) Date of filing: 22.02.2013
(51) Int. Cl.: G06F 3/03

(54) **Electronic device with a remote control**

(30) Priority: 24.02.2012 TR 201202123
(71) Applicant: Vestel Elektronik Sanayi ve Ticaret A.S., 45030 Manisa (TR)
(72) Inventor: Sariarslan, Muhammet Kursat, 45030 Manisa (TR)
(74) Representative: Cayli, Hülya

(57) **Abstract**

Present invention discloses a device (D) equipped for gesture detection and comprising a first means for receiving infrared signals (R) generated by at least one means for emitting infrared signals (T) of a remote control (C), positioned on at least a first edge (K1) and at least a second edge (K2) of the device (D), which detect infrared signal emitted by said emitting means (T); a second means for generating a level signal (P) which is connected to said receiving means (R) and wherein said level signal is indicative of power level of infrared signals received by infrared receiving means (R); a third means (M) for receiving said level signals generated by second means and for processing changes in said level signals for gesture detection. The invention further comprises a gesture detection method for a device with a remote control.

## Description

### Technical Field

Present invention discloses a gesture detection system for electronic devices equipped with a remote controller.

### Prior Art

Recent consumer devices, such as display devices, set top boxes, comprise more and more functions to improve functionality and user experience. Since most of these devices are equipped with a remote control, the more the functions of the device are, the more function buttons are required to control these functions on the remote control. This results in increased remote control size, which decreases usability and increases complexity.

Several solutions are proposed for the solution of stated problem in the art. A widely used technique related to control of electronic devices is the implementation of "gesture detection" within remote controls, which enables tracking of remote control movements and generating commands in accordance with movements of remote controls. Remote controls, which are capable of "gesture detection", generally use a motion sensor (i.e. gyroscope, accelerometer) to detect movements of remote control and sends commands to the device in accordance with detected movements.

However stated solution has problems related to the system used within. Since motion sensors known in the technical field are high cost, usage of such sensors increase the cost of the device. Another disadvantage of said system is being prone to misdetections such as sending a command to the device while the user is changing the location of the remote control either intentionally or unintentionally.

Prior art document KR 20090030163 discloses a remote control with motion detection, which uses a plurality of motion sensors to detect the motion of the control and a controller to detect presence of a control motion by evaluating motion detected by said sensors. However, due to high cost of motion sensors, the system is disadvantageous.

### Brief Description of the Invention

Present invention discloses a device equipped for gesture detection and comprising a first means, for receiving infrared signals generated by at least one means for emitting infrared signals of a remote control, positioned on at least a first edge and at least a second edge of the device, which detect infrared signal emitted by said emitting means; a second means for generating a level signal which is connected to said receiving means and wherein said level signal is indicative of power level of infrared signals received by infrared receiving means; a third means for receiving said level signals generated by second means and for processing changes in said level signals for gesture detection.

The electronic device of present invention provides gesture detection with improved reliability and reduced cost in terms of used components within the device to detect gestures. The system of the present invention enables determination of intentional movements of remote control of the device and does not generate false commands caused by unintentional movements of said remote control.

The invention further comprises a gesture detection method for an electronic device equipped with a remote control to navigate through functions of the device and adjust parameters with the use of a single function button and movements of the remote control. The method enables usage of device functions with the help of a single function button, hence improves usability.

### Objective of the Invention

The objective of the invention is to provide a gesture detection system and method for an electronic device equipped with a remote control.

Another objective of the invention is to provide a cost-effective gesture detection system for an electronic device equipped with a remote control.

Another objective of the invention is to provide gesture detection system for an electronic device equipped with a remote control which is capable of eliminating misdetections.

Another objective of the invention is to provide a gesture detection method to provide usability for device functions with the use of a single function.

### Description of the Drawings

Figure 1 shows the electronic device and remote control thereof disclosed by the present invention.
Figure 2 is a block diagram of the gesture detection system disclosed by the present invention.

The reference numbers as used in figures may possess the following meanings.

| | |
|---|---|
| Button | (B) |
| Remote control | (C) |
| Electronic device | (D) |
| First edge | (K1) |
| Second edge | (K2) |
| Processing means | (M) |
| Level signal generation means | (P) |
| Infrared signal receiving means | (R) |
| Infrared signal emitting means | (T) |

### Detailed Description of the Invention

Most of the consumer electronic devices comprise a remote control to enable usage of device functions remotely. With the developing technologies and increased functions of these devices, high number of buttons and therefore large remote controls are required, which decreases user comfort.

Recent devices which are equipped with a remote control use "gesture detection", which means generating a command or triggering a function of the device in accordance with physical movement of the remote control. In the technical field, motion sensors such as gyroscopes or accelerometers are used to detect the movements of remote control. However such sensors are expensive and increase the cost of the remote control. Furthermore, such remote controls react to every movement of remote control, which may be either intentionally or unintentionally. Therefore a low cost and reliable gesture detection system is required for such systems.

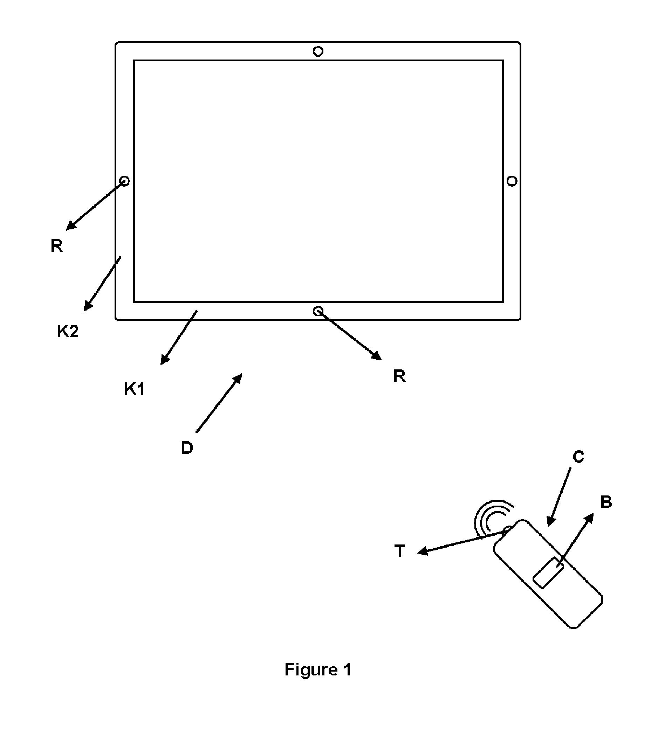

Figure 1 shows the electronic device (D) equipped with a remote control (C), which can be used to control at least a function of said device (D), of the present invention. The device (D) of the present invention comprises at least two first means for receiving infrared signals (R) positioned on at least a first edge (K1) and at least a second edge (K2) of the device (D). The remote control (C) comprises at least one means for emitting infrared signals (T). The infrared signal emitted by said emitting means (T) can be detected by said signal receiving means (R). The remote control (C) may further comprise at least one button (B) which activates said emitting means (T) to emit a detection signal.

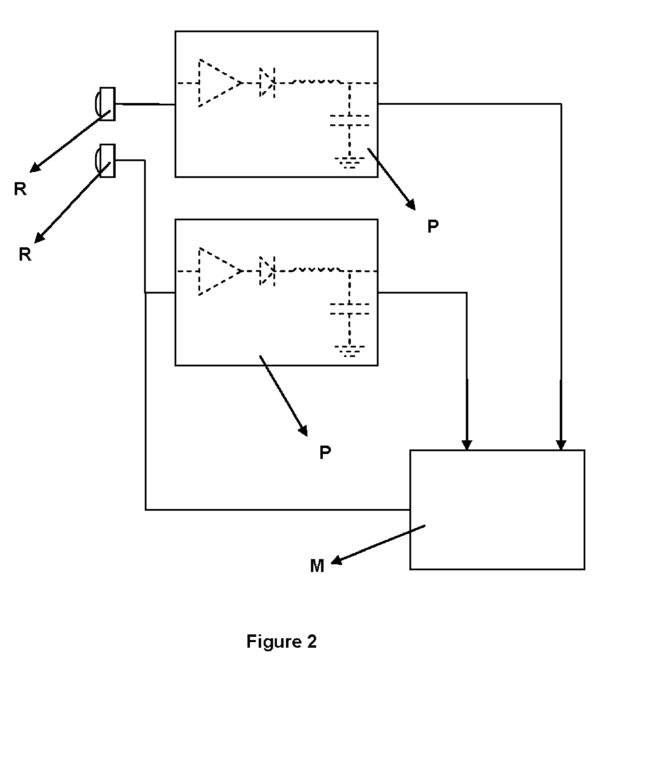

Figure 2 shows block diagram of the gesture detection system of the present invention. The system comprises at least one second means for generating a level signal (P) which is connected to signal receiving means (R) and wherein said level signal is indicative of the power level of infrared signal received by infrared receiving means (R), for each infrared receiving means (R). The system further comprises at least one third means (processing means) (M) for receiving said level signals generated by said means for generating the level signal (P), processing changes in said level signals to detect movement of said remote control. The third means (M) preferably inputs an output of at least one of said receiving means (R) and processes changes in said level signals in the existence of said detection signal. Preferably, said third means (M) may further generate a control command to activate a function (or a visual menu) preferably upon receiving said detection signal via said receiving means (R).

To avoid effects of ambient light on the system of the invention, the device (D) may comprise a daylight filter (not shown in figures) positioned on the infrared signal receiving means (R) to avoid receiving visible light spectrum. The daylight filter may further partially block infrared light which may be introduced by external interferences. Consequently, the infrared signal emitting means (T) is perceived to be the significant infrared light source and detection can be done reliably.

In a further embodiment of the invention, the third means (M) may further comprise an analog and/or digital daylight filter, which detects the ambient light level received by receiving means (R) when the device (D) is powered on, after an infrared signal is received from infrared signal transmitting means (T) and/or periodically with a predefined period and determines a threshold such that, an infrared light level higher than said threshold is evaluated to determine the motion of the remote control (C).

When the user is to use a function of the device (D) via remote control (C), the user may activate said function by using said button (B) for activating said signal emitting means (T). To adjust parameters of the function or navigate between several functions, the user may simply hold said button (B) and move the remote control (C). Since all signal receiving means (R) of the device (D) receive infrared signal and the power level of the received infrared signal varies in relation to the movement of the remote control (C), means for generating level signals (P) generates varying signals in relation to the movement of the remote control (C). The third means (M) detects detection signal and keeps track of changes in level signals as long as said detection signal is received. The third means (M) therefore calculates movement of the remote control (C) and generates necessary control signals and/or commands to enable said navigation. Consequently, the use of functions of the device (D) can even be enabled with the use of a single button and by moving the remote control (C). Since movement detection is conducted as long as the detection signal is received, which is generated by said signal transmitting means (T) as long as said button (B) is pressed, the movements detected by the system of the invention can always be interpreted as intentional movements to control said device (D).

In an alternative embodiment of the invention, the user may activate a function of said device (D) either by pressing the button (B) for activating said signal emitting means (T) or any other button comprised by said remote control (C). When the button is pressed, an infrared signal is emitted by said signal emitting means (T), and a function of the device (D) is activated. Upon the activation of said function, third means (M) may start processing changes in said level signals to enable user to navigate through the functions by moving the remote control (C). Said level signal processing may be stopped either due to algorithm of the function of the device (D) (i.e. activation of a function with no parameter to adjust) or by a user command given by pressing a button (i.e. an exit button) of the remote control (C).

The present invention further provides a gesture detection method for a device (D) equipped with a remote control (C) comprising at least a function button which means for activating transmission of a command signal to said device (D) and which can be used to control at least a function of said device (D) wherein said device (D) is capable of detecting movements of said remote control (C). When said function button is used, remote control (C) sends a command signal to said device (D) to activate a function of said device (D). Receiving said command, the device (D) activates a function which is first entry of a list of functions comprised by said device (D). Upon receiving said command, the device (D) may activate an image on screen display. When said function button is pressed repeatedly, in other words receiving said command repeatedly, the device (D) navigates through said list of functions and preferably activates corresponding display images. If the user stops using function button for a predefined time, motion detection function of the device (D) is activated to detect movements of said remote control (C). When a movement is detected by the device (D), device (D) either navigates in a list of parameters of a function or adjusts a selected parameter. The relation between movement direction and navigation and/or adjustment options can be defined in accordance with the structure of list of functions and/or parameters defined for each function. In an exemplary embodiment, detection of a vertical movement may refer to navigation among a list of parameters while detection of a horizontal movement may refer to adjustment of a selected parameter. The list of functions may comprise an exit option which can be available by using said function button. Alternatively, an exit button may be comprised by said remote control (C) which activates an exit signal and when the exit signal is detected by the device (D), the selected function of the device may be stopped.

In an alternative embodiment the motion detection function may be activated by a detection button comprised by the remote control (C). Consequently, the navigation among parameters and/or adjustment of a selected parameter can be activated by the user.

In another embodiment of the present invention, when a button of said remote control (C) is pressed shortly, a signal packet is sent to said device (D). When the device (D) receives the signal packet, device (D) navigates through said list of functions. When the desired function (the function to be adjusted) is selected, button of said remote control (C) is pressed longer and instead of a signal packet, a continuous signal is sent to the device (D). Said means for receiving infrared signals (R) detect signal level of said continuous signal and store first signal level in a memory. During the gesture detection when the remote control (C) is moved, signal levels detected by the means for receiving infrared signals (R) changes. This change is detected by comparing the new detected signal level with the stored signal level. According to the signal level change, motion of the remote control (C) is detected (for example when the signal level detected by a means for receiving infrared signals (R) is increased, it is detected that remote control (C) moved through said receiving means (R)). In this embodiment, after the adjustment is made by gesture detection, when the button of the remote control (C) is not pressed for a predetermined of time, preferably device (D) and remote control (C) return to their initial states (states before the button of said remote control (C) is pressed shortly). In the initial state, when the button of the remote control (C) is pressed for a longer time (for another predetermined time) device (D) goes to standby mode. Thus, by using only a single button of the remote control (C), device (D) is fully controlled.

Within the detection system and method of the present invention, low cost gesture detection for a remote control (C) of a device (D) is provided with reliable movement detection and useful function navigation.

## Claims

1. A device (D) equipped for gesture detection, **characterized in that** said device (D) comprises:
- a first means for receiving infrared signals (R) positioned on at least a first edge (K1) and at least a second edge (K2) of the device (D), which detect infrared signal emitted by said emitting means (T);
- a second means for generating a level signal (P) which is connected to said infrared signal receiving means (R) and wherein said level signal is indicative of power level of infrared signals received by infrared signal receiving means (R);
- a third means (M) for receiving said level signals generated by second means and for processing changes in said level signals for gesture detection.

2. A device (D) according to Claim 1, **characterized in that** said remote control (C) further comprises at least one button (B) which activates said signal emitting means (T) to emit a detection signal.

3. A device (D) according to Claim 2, **characterized in that** said third means (M) inputs an output of at least one of said signal receiving means (R) and processes changes in said level signals in the existence of said detection signal.

4. A device (D) according to Claim 1, 2 or 3, **characterized in that** said third means (M) generates a control command to activate a function of said device (D).

5. A device (D) according to Claim 4, **characterized in that** said third means (M) generates said control command upon receiving said detection signal via said signal receiving means (R).

6. A device (D) according to Claim 1, **characterized in that** said remote control (C) further comprises a daylight filter positioned on the infrared signal receiving means (R).

7. A device according to Claim 1, **characterized in that** said third means (M) further comprises a daylight filter which detects the ambient light level received by infrared signal receiving means (R) and determines a threshold such that, an infrared light level higher than said threshold is evaluated by said infrared signal receiving means (R) to determine the motion of the remote control (C).

8. A gesture detection method for a device (D), **characterized in that** said method comprises the steps of;
- sending a command signal from a remote control (C) to said device (D) to activate a function of said device (D);
- activating a function by the device (D) wherein said function is first entry of a list of functions comprised by said device (D), when the device (D) receives said command;
- navigation of the device (D) through said list of functions while receiving said command repeatedly;
- activating a motion detection function of the device (D) to detect movements of said remote control (C); and
- navigating in a list of parameters of a function or adjusting a selected parameter when a movement is detected by the device (D).

9. A method according to claim 8, **characterized in that** the step of sending a command signal from a remote control (C) to said device (D) to activate a function of said device (D) comprises sending a signal packet to the device (D) by pressing a button of said remote control (C) shortly.

10. A method according to claim 9, **characterized in that** said activation of said function by the device (D) comprises sending a continuous signal to the device (D) by pressing said button longer time as compared to the sending said signal packet.

11. A method according to claim 10, **characterized in that** the step of activation of motion detection function of the device (D) to detect movements of said remote control (C) comprises:
- detecting signal level of said continuous signal;
- storing detected signal level;
- detecting another signal level;
- comparing last detected signal level with stored signal level;
- detecting the movement of the remote control (C) according to comparison result.

12. A method according to claim 9-11, **characterized in that** said method further comprises returning the device (D) and remote control their initial states, which are the states wherein said button is not pressed, when said button is not pressed during a predetermined time.

13. A method according to claim 12, **characterized in that** said method further comprises sending the device (D) to standby mode when the button is pressed in another predetermined time at the initial states of the device (D) and remote control (C).
